# EUROPEAN PATENT APPLICATION

(11) **EP 1 388 494 A2**
(43) Date of publication of application: **11.02.2004**
(21) Application number: 03018024.4
(22) Date of filing: 07.08.2003
(51) Int. Cl.: B65B 31/02, B65B 51/22

(54) **Method and machine for vacuum packaging and ultrasonic sealing of bags**

(30) Priority: 07.08.2002 JP 2002229701
(71) Applicant: Toyo Jidoki Co., Ltd., Tokyo (JP)
(72) Inventor: Hiramoto, Shinichi, Iwakuni-shi, Yamaguchi (JP)
(74) Representative: Schubert, Siegmar

(57) **Abstract**

An ultrasonic sealing device and method, in which an ultrasonic sealing device (3) is disposed near a bag take-out position of a rotary type vacuum processing device (2) that has a plurality of vacuum chambers (14) disposed at equal intervals on the circumference of an intermittently rotating table (13), a degassed bag (W) is taken out of the interior of a vacuum chamber (14) stopped at the bag take-out position (9) and is transported to and positioned in the sealing position of the ultrasonic sealing device (3), a horn element (17) and an anvil are caused to advance and press-hold a predetermined position on the bag mouth and perform ultrasonic sealing to the bag (W). The temporary sealing to the bag mouth is preferably performed in the rotary type vacuum processing device (2) so that the degassed state inside the bag is maintained when the vacuum chamber (14) is placed in an atmospheric pressure state.

## Description

### BACKGROUND OF THE INVENTION

### 1. Field of the Invention

The present invention relates to a vacuum packaging method that performs a degassing treatment to filled bags and then ultrasonically seals the bag mouths and also to a vacuum packaging machine that performs this method.

### 2. Prior Art

Japanese Patent Application Laid-Open (Kokai) No. 9-48409 discloses a vacuum packing machine.

In this vacuum packing machine, a plurality of vacuum chambers are disposed at equal intervals on the circumference of an intermittently rotating table, and each vacuum chamber comprises a main body that is fastened to the table and a cover that can be opened and closed with respect to the main body. The vacuum chamber can be placed in a vacuum state or in an atmospheric pressure state with a predetermined timing, and grippers that suspend filled bags in a state in which the bag mouths face upward are disposed on the main body of the vacuum chamber. Furthermore, an impulse sealing device is disposed above the grippers; and typically a moving element (a heater stand) is disposed on the main body of the vacuum chamber, and a receiving stand is disposed on the cover of the vacuum chamber.

In this vacuum packaging machine, filled bags are accommodated inside the vacuum chambers while the table makes repeated rotation and stopping movements, and a degassing treatment is performed by placing the interiors of the vacuum chambers in a vacuum state so that a vacuum is caused to act on the filled bags. Then, after the bag mouths are sealed by the impulse sealing devices, the interiors of the vacuum chambers are placed back in the atmospheric pressure state, the covers are opened, and then the sealed filled bags are taken out of the chambers.

Japanese Patent Application Publication (Kokoku) No. 5-58988 discloses a vacuum packaging machine in which the table rotates continuously.

However, the vacuum packaging machines described above have problems. There is a considerable chance that portions of the contents with which the bags are filled will adhere to the sealing portions as a result of vibration that occurs when the filled bags are received from the filling machine via the transfer device or as a result of boiling of liquid contents during the degassing process, etc. If impulse sealing is performed to such sealing portions, a so-called "bite-in" seal (in which a portion of the contents with which the bags are filled will bite into the sealed portion) tends to occur, resulting in incomplete sealing of the bag mouths. Furthermore, since impulse sealing always requires cooling after the sealing, the total time required for sealing increases; as a result, the productivity cannot be increased. If the number of vacuum chambers is increased in order to raise the productivity, then the size of the apparatus increases.

Japanese Patent No. 3079185 discloses different sealing method. In the ultrasonic sealing method of this Japanese patent, even if a portion of the contents with which the bag is filled adheres to the sealing portions, these contents are expelled in the upward and downward directions by ultrasonic waves; as a result, the problem of a "bite-in" seal does not occur, and sealing of the bag mouths is assuredly accomplished. Furthermore, such sealing is completed in a shorter time compared to heat sealing or impulse sealing.

Accordingly, if an impulse sealing device is provided in vacuum chambers instead of a conventional impulse sealing device, it is considered that the above-described "bite-in" seal that tends to occur in vacuum packaging machines is prevented and that the sealing time can be shortened at the same time, thus improving the productivity.

However, compared to impulse sealing devices, ultrasonic sealing devices are large and expensive. In addition, when such devices are disposed in the respective vacuum chambers in the same configuration as impulse sealing devices, the vacuum packaging apparatus as a whole increases in size and cost. Furthermore, the covers of the vacuum chambers tend to open during the sealing process by the action of a holding force that is higher than that of an impulse sealing device; and if measures are taken to prevent this, then the size of the vacuum packaging apparatus increases, and its structure becomes more complicated.

It can be, however, conceivable to provide an ultrasonic sealing device near a vacuum packaging machine as disclosed in Japanese Patent Application Laid-Open (Kokai) No. 61-33915.

In this prior art, a sealing device is not installed inside the vacuum chambers. Instead, a sealing device is installed near a vacuum packaging machine, the bag mouths of vacuum-treated bags are gripped by a sealing bar of this sealing device and a receiving member, the sealing device is rotated so that the bags are taken out of the vacuum chambers and rotationally transported to a predetermined position, so that the bag mouths are sealed in the process of this movement. In other words, in this prior art, an ultrasonic sealing device acts as both a sealing device and a bag removing device (with its horn element and anvil respectively corresponding to the sealing bar and receiving member of the above-described sealing device).

However, the ultrasonic sealing device in this case is large and heavy and cannot be simply rotated as a whole as in the case of the impulse sealing device described in the above-described Japanese Patent Application Laid-Open (Kokai) No. 9-48409. Further, if sealing is performed while this device is rotating, there is an increased possibility of a deviation in the sealing position. Moreover, when such a technique is used, it is necessary to complete the sealing action while the sealing device is rotating and the bags are rotationally transported to a predetermined position, and the time required for return to the original position is not allotted to the time required for sealing. Consequently, only half of the time required for one process (i.e., the time required for one stop and one rotation) is allotted to the sealing time. Accordingly, it is difficult to shorten the time of one process and to increase the productivity.

### SUMMARY OF THE INVENTION

The present invention is to solve the above-described problems that occur when an ultrasonic sealing device is applied to a vacuum packaging machine; and it is an object of the present invention to provide a vacuum packaging method and vacuum packaging machine that can avoid any sealing position deviation and increase the productivity without increasing the size or cost of the apparatus.

The above object is accomplished by unique steps of the present invention for a vacuum packaging method that uses a rotary type vacuum processing device, wherein
the rotary type vacuum processing device is comprised of:
an intermittently rotating or continuously rotating table, and
a plurality of vacuum chambers disposed at equal intervals on the circumference of the intermittently rotating or continuously rotating table, in which each one of the vacuum chambers comprises a main body that is fastened to the table and a cover that can be opened and closed with respect to the main body;
each vacuum chamber can be placed in a vacuum state or in an atmospheric pressure state with a predetermined timing; and
grippers that suspend filled bags in a state in which bag mouths of the filled bags face upward are disposed on the main body; and
the method includes, during the intermittent rotation or continuous rotation of the table, the steps of:
accommodating a filled bag inside each vacuum chamber,
performing a degassing treatment by placing the interior of the vacuum chamber in a vacuum state so that a vacuum is caused to act on the filled bag,
placing the vacuum chambers back to an atmospheric pressure state, and
opening the cover; and
the further steps of:
taking out the filled bag, which has been subjected to the degassing treatment, from the vacuum chamber, and
conveying the filled bag to an ultrasonic sealing device disposed near the rotary type vacuum processing device, where the bag mouth of the filled bag is ultrasonically sealed by means of the ultrasonic sealing device.

In this method, the bag mouths are preferably placed under tension by way of pulling both edges of the bag mouths prior to the ultrasonic sealing. As a result, a formation of wrinkles in the location where the ultrasonic sealing is performed is prevented. Furthermore, it is preferable that the bag mouths be temporarily sealed following the degassing treatment. This is done so that the degassed state inside the bags is securely maintained when the vacuum chambers are placed back in the atmospheric pressure state. When this temporary sealing is performed, it is preferable that the sealing position of the ultrasonic sealing be lower than the position of the temporary sealing.

In the above-described method of the present invention, there is no need to dispose ultrasonic sealing devices in the respective vacuum chambers. Accordingly, an increase in the cost and size of the vacuum packaging machine is prevented. Furthermore, since the ultrasonic sealing device is not rotated, deviations in the sealing position is prevented. Moreover, the ultrasonic sealing device performs ultrasonic sealing while using in full the time that passes until the next bag is transported by the transporting device. Moreover, since the ultrasonic sealing completes the sealing in a short time as described above, the time required for one process is shortened, and the productivity improves. Moreover, the characteristics of the ultrasonic sealing device is sufficiently utilized; and thus bite-in sealing, for instance, can be prevented.

The above object is accomplished also by a unique structure of the present invention for a vacuum packaging machine equipped with an ultrasonic sealing device, and the vacuum packaging machine comprises a rotary type vacuum processing device, an ultrasonic sealing device and a bag transporting device; and
(1) the rotary type vacuum processing device is comprised of:
   an intermittently rotating table, and
   a plurality of vacuum chambers disposed at equal intervals on the circumference of the intermittently rotating table, wherein
      each one of the vacuum chambers comprises a main body that is fastened to the table and a cover that can be opened and closed with respect to the main body;
      each vacuum chamber can be placed in a vacuum state or in an atmospheric pressure state with a predetermined timing; and
      grippers that suspend filled bags in a state in which bag mouths of the filled bags face upward are disposed on the main body of the vacuum chamber; and
   the rotary type vacuum processing device, during the repeated rotation and stopping of the table,
   accommodates filled bags inside the vacuum chambers, and
   performs a degassing treatment by placing interiors of the vacuum chambers in a vacuum state so that a vacuum is caused to act on the filled bags;
(2) the ultrasonic sealing device is disposed near the rotary type vacuum processing device; and
(3) the bag transporting device takes out the filled bags that have been subjected to the degassing treatment from the vacuum chambers stopped at a take-out position of the rotary type vacuum processing device and then transports the filled bags to a sealing position of the ultrasonic sealing device.

In this vacuum packaging machine, the bag transporting device preferably comprises:
a first transporting device that takes out the filled bags, which have been subjected to the degassing treatment, from the vacuum chambers stopped at the take-out position and transports the filled bags to a predetermined position, and
a second transporting device that receives the filled bags from the first transporting device at the predetermined position and transports the filled bags to a sealing position.

The second transporting device can be equipped with a pair of grippers that grip both side edges of the filled bags, and the spacing between the grippers can be widened and narrowed.

By way of widening the spacing of the grippers so that the bag mouths are pulled in the opposite directions from both edges and thus placed under tension, a formation of wrinkles in the area that is ultrasonically sealed can be prevented. Furthermore, in the above structure of the vacuum packaging machine, a temporary sealing device that holds and temporarily seals the bag mouths is disposed inside the respective vacuum chambers. This temporary sealing device is comprised of a receiving stand and a moving element (hot plate, for instance) that is pressed against the receiving stand.

The above object is further accomplished by another set of unique steps of the present invention for a vacuum packaging method that uses a rotary type vacuum processing device, wherein
the rotary type vacuum processing device is comprised of:
an intermittently rotating table, and
a plurality of vacuum chambers disposed at equal intervals on the circumference of the intermittently rotating table, in which each one of the vacuum chambers comprises a main body that is fastened to the table and a cover that can be opened and closed with respect to the main body,
each vacuum chamber can be placed in a vacuum state or in an atmospheric pressure state with a predetermined timing,
grippers that suspend filled bags in a state in which bag mouths of the filled bags face upward are disposed on the main body of the vacuum chamber, and
an anvil which forms a part of an ultrasonic sealing device is provided above the grippers disposed on the main body; and
the method includes, during the repeated rotation and stopping of the table, the steps of:
accommodating a filled bag inside the vacuum chambers,
performing a degassing treatment by placing interiors of the vacuum chambers in a vacuum state so that a vacuum is caused to act on the filled bag,
placing the vacuum chambers back to an atmospheric pressure state, opening the cover, and
causing a horn element of an ultrasonic sealing device disposed near the rotary type vacuum processing device to advance so as to press-hold the bag mouth of the filled bag between the horn element and the anvil and to perform ultrasonic sealing, and
the further steps of:
releasing the grippers so that sealed filled bag is taken out of the vacuum chambers.

In this method, it is preferable that the bag mouths be temporarily sealed following the degassing operation. When this temporary sealing is performed, it is preferable that the sealing position of the ultrasonic sealing be located below the sealing position of the temporary sealing.

In the method, anvils that form a part of the ultrasonic sealing device are disposed in the main bodies of the respective vacuum chambers. If only anvils are thus disposed, the size and weight involved are not very great, and the press-holding force that accompanies ultrasonic sealing can be received by the main bodies of the vacuum chambers. Accordingly, it is possible to avoid a size increase, complexity and cost of the vacuum packaging machine. Furthermore, there is no need to transport the bags to a separate sealing position from the interiors of the vacuum chambers, and there is likewise no rotation of the ultrasonic sealing device; accordingly, deviations in the sealing position can be prevented. Moreover, though ultrasonic sealing is performed while the vacuum chambers are stopped, since ultrasonic sealing can complete sealing in a short period of time as described above, the stopping time is shortened and the productivity improves. Furthermore, the characteristics of the ultrasonic sealing device can be sufficiently utilized, and thus bite-in sealing, for instance, can be prevented.

The above object is accomplished by another unique structure of the present invention for a vacuum packaging machine equipped with an ultrasonic sealing device, and the vacuum packaging machine comprises a rotary type vacuum processing device and an ultrasonic sealing device; and
(1) the rotary type vacuum processing device is comprised of:
   an intermittently rotating table, and
   a plurality of vacuum chambers disposed at equal intervals on the circumference of the intermittently rotating table, wherein
      each one of the vacuum chambers comprises a main body that is fastened to the table and a cover that can be opened and closed with respect to the main body;
      each vacuum chamber can be placed in a vacuum state or in an atmospheric pressure state with a predetermined timing; and
      grippers that suspend filled bags in a state in which bag mouths of the filled bags face upward are disposed on the main body of the vacuum chamber; and
   the rotary type vacuum processing device, during the process of repeated rotation and stopping of the table,
   accommodates filled bags inside the vacuum chambers, and
   performs a degassing treatment by placing interiors of the vacuum chambers in a vacuum state so that a vacuum is caused to act on the filled bags; and
(2) the ultrasonic sealing device is disposed near a cover opening position of the rotary type vacuum processing device, the ultrasonic sealing device having an anvil which is provided above the grippers of the main body of each one of the vacuum chambers, wherein a horn element of the ultrasonic sealing device can advance toward and withdraw from the anvil provided in each one of the vacuum chambers stopped at the cover opening position, and the horn element performs ultrasonic sealing by press-holding the bag mouths against the anvil.
   In this structure, a temporary sealing device that holds and temporarily seals the bag mouth is disposed inside each one of the vacuum chambers. It is preferable that the anvil be provided below the temporary sealing device.

### BRIEF DESCRIPTION OF THE DRAWINGS

Figure 1 is a top view of the vacuum packaging machine according to the present invention;
Figure 2(a) is a front view of one step of the transporting and ultrasonic sealing process of a degassed bag in the vacuum packaging machine, and Figure 2(b) is a side view thereof;.
Figure 3(a), a front view, and Figure 3(b), a side view, of the next step thereof;
Figure 4(a), a front view, and Figure 4(b), a side view, of the next step thereof;
Figure 5(a), a front view, and Figure 5(b), a side view, of the next step thereof;
Figure 6 is a top view of another vacuum packaging machine according to the present invention; and
Figure 7 is an enlarged sectional side view of one of the vacuum chambers of the vacuum packaging machine.

### DETAILED DESCRIPTION OF THE INVENTION

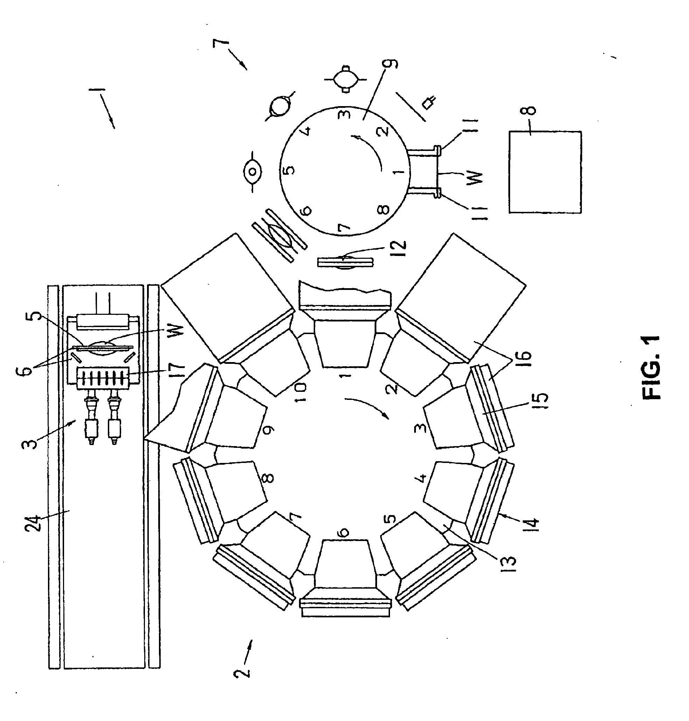

The present invention will be concretely described below with reference to Figures 1 through 7.

First, as seen from Figure 1, the vacuum packaging machine 1 of the present invention comprises a rotary type vacuum processing device 2, an ultrasonic sealing device 3 and a bag transporting device (which is comprised of a first transporting device and a second transporting device). As to the first and second transporting devices, only the gripping elements 5 and 6 of are illustrated in the drawings. The vacuum packaging machine 1 is substantially the same as those described in, for example, Japanese Patent Application Laid-Open (Kokai) Nos. 9-254931 and 2001-122219 and is installed near a filling machine 7.

The filling machine 7 is more or less the same as those described in the above-described laid-open patent applications. The filling machine 7 grips empty bags W, which are supplied from a bag supplying device 8, by means of grippers 11 (only one pair of grippers are shown) that are disposed at equal intervals on the circumference of an intermittently rotating rotor 9 and successively performs processes such as printing on the bags W, opening of the mouths of the bags (called "bag mouths"), filling the bags with solid contents, filling the bags with liquid contents and partial sealing (sealing that leaves an unsealed portion in order to allow a degassing treatment) as the rotor 9 rotates intermittently. Afterward, in the discharge process (that occurs at the stopping position 7), the bags W filled with solid contents and/or liquid contents (called "filled bags") are gripped by a transfer device (only its gripping portion 12 is shown in the drawings) and transferred to the rotary type vacuum processing device 2.

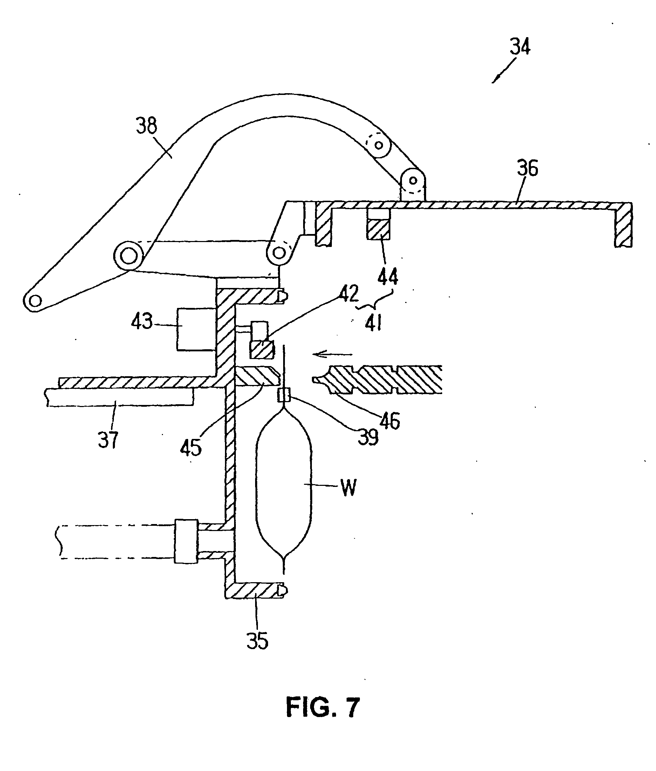

In the rotary type vacuum processing device 2, a plurality of vacuum chambers 14 are disposed at equal intervals on the circumference of an intermittently rotating table (or a rotary table) 13. Each vacuum chamber 14 comprises a main body 15, which is fastened to the table 13, and a cover 16, which opens and closes with respect to the main body 15. Grippers (see the grippers 39 in Figure 7), which grip the bag W, and a moving element (sealing stand) (see the moving element 42 in Figure 7) of a temporary sealing device are disposed on the main body 15, and a receiving stand (see the receiving stand 44 in Figure 7) of the temporary sealing device is disposed on the cover 16.

In this rotary type vacuum processing device 2, filled bags (merely called "bags" below) W are received from the (gripping portion 12 of the) above-described transfer device and are held by the grippers (39) disposed in the main bodies 15 of the vacuum chambers 14. During the repeated rotation and stopping of the table 13, the cover 16 of each vacuum chamber 14 is closed and then the interior of the vacuum chamber 14 is placed in a vacuum state so that a vacuum is caused to act on the bag inside the chamber 14, thus accomplishing a degassing treatment on the bags and temporarily sealing the bag mouth (so as to be sealed to such an extent that the degassed state inside the bag is maintained when the vacuum chamber 14 is placed back in an atmospheric pressure state); and then, the interior of the vacuum chamber 14 is placed back in the atmospheric pressure state, and the cover 16 is opened.

The rotary type vacuum processing device 2 itself is basically the same as that of vacuum packaging machines described in the above-described Japanese Patent Application Laid-Open (Kokai) Nos. 9-254931 and 2001-122219, except that the main sealing operation is not performed in the shown vacuum processing device 2.

Then, at a take-out position (which is the stopping position 9) of the rotary type vacuum processing device 2, the degassed bag W inside the vacuum chamber 14 that is stopped with its cover 16 opened is taken out by the first transporting device and transported to a predetermined position of the ultrasonic sealing device 3. Then, the bag W is received by the second transporting device and is transported to and positioned in a specified sealing position of the ultrasonic sealing device 3.

The ultrasonic sealing device 3 has a horn element 17 and an anvil 18 (both will be described below) that can advance and retract. The horn element 17 and the anvil 18 are caused to advance toward the bag W that has been gripped by the gripping element 6 of the second transporting device and positioned in the above-described specified sealing position. Predetermined positions on the bag mouth are held, and ultrasonic sealing is performed to the bag.

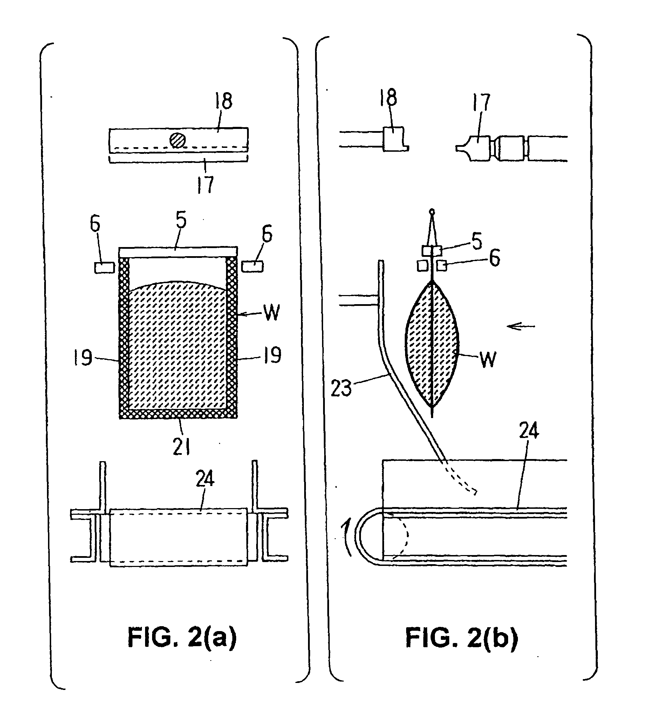

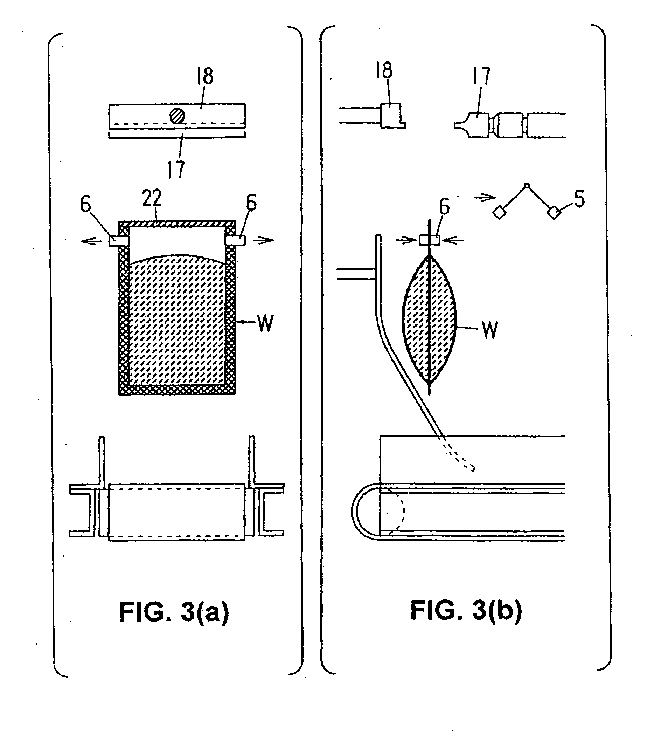

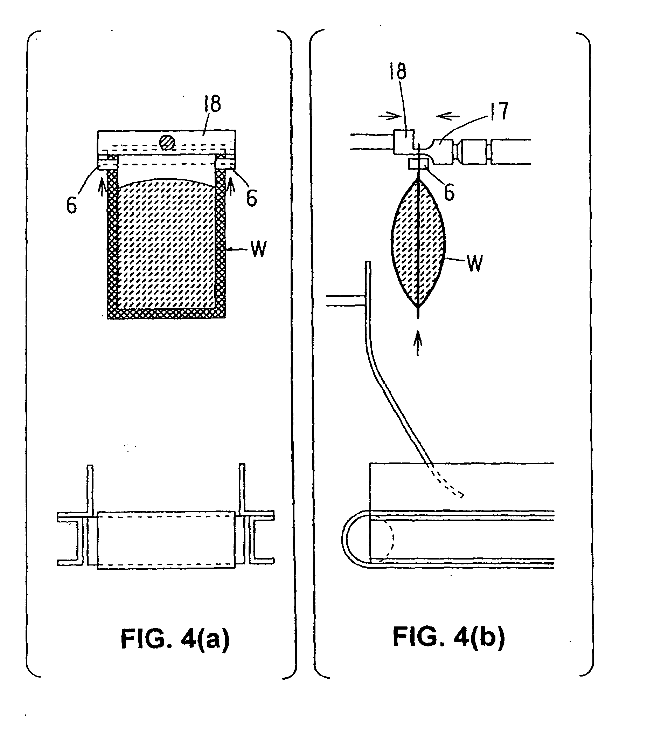

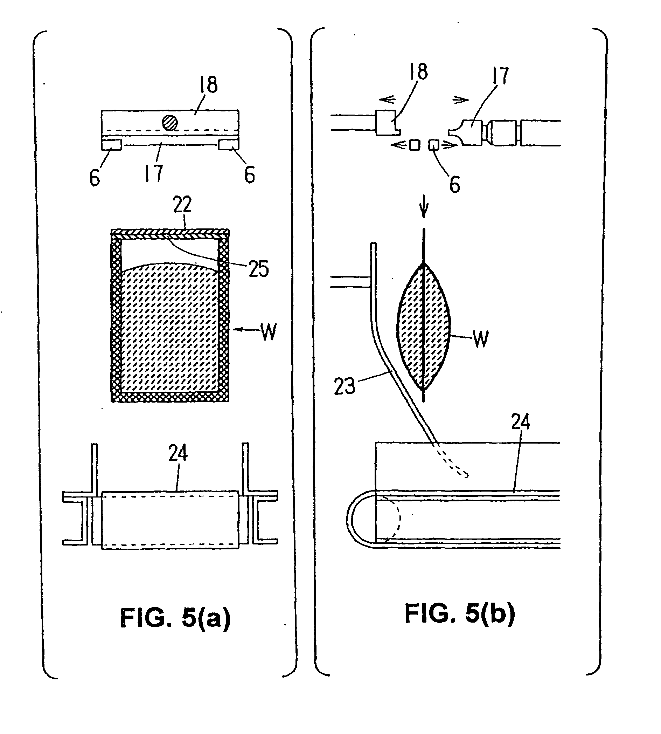

The above-described transporting process of the bags W performed by the first and second transporting devices and the ultrasonic sealing process of the ultrasonic sealing device 3 can be described as follows with reference to Figures 2(a) through 5(b).
(1) The first transporting device grips the upper edges of the bag W inside the vacuum chamber 14 (that is stopped at the take-out position 9 of the rotary type vacuum processing device 2) by means of its gripping elements 5 (next, the grippers of the vacuum chamber 14 are opened) and rotationally transports this bag in the horizontal plane. Then, the first transporting device stops, so that the bag W is positioned in a predetermined position. As shown in Figures 1 and 2(a) and 2(b), this predetermined position is directly beneath the above-described specified sealing position, and the pair of gripping elements 6 of the second transporting device wait in an open state in a position that is slightly below the gripping elements 5. A device similar to the moving means described in the above-described Japanese Patent Application Laid-Open (Kokai) No. 9-254931 can be used as the first transporting device. In Figures 2(a) and 2(b), the reference numerals 19 refer to the side sealed portions of the bag W, 21 indicates the bottom sealed portion, and 24 indicates a product conveying conveyor.
(2) Next, as shown in Figure 3(b), the gripping elements 6 close so as to grip both edges of the bag W, and the gripping elements 5 are opened. The lateral spacing of the gripping elements 6 is widened as shown by arrows in Figure 3(a) so that the bag mouths are pulled and placed under tension (placed in a tautly stretched state); meanwhile, the gripping elements 5 return so as to grip and transport next bag W. In Figures 3(a) and 3(b), the reference numeral 22 indicates the temporarily sealed portion of the bag W, the temporarily sealed portion being formed by thermal welding made by the above-described moving element (hot plate, for instance) and receiving stand.
(3) Next, as shown in Figures 4(a) and 4(b), the gripping elements 6 are raised so that the bag W is moved upward, and the bag W is positioned in the sealing position. In this sealing position, the horn element 17 and anvil 18 (both having a lateral size sufficiently larger that the lateral size of the mouth portion of a bag) of the ultrasonic sealing device 3 are caused to advance toward each other (see Figure 4(b)) so as to ultrasonically seal a predetermined position on the bag mouth.
(4) Next, as shown in Figures 5(a) and 5(b), the horn element 17 and anvil 18 of the ultrasonic sealing device 3 are retracted (see Figures and 5(b)), the gripping elements 6 are opened, and the bag W is dropped. The bag W drops onto the product conveying conveyor 24 via a guide chute 23 and is discharged from the bottom of the ultrasonic sealing device 3.

In Figures 5(a) and 5(b), the reference numeral 25 indicates the ultrasonically sealed portion, which is formed below the temporarily sealed portion 22. As a result of the ultrasonically sealed portion 25 being below the temporarily sealed portion 22, the bag mouth is completely sealed even if there is some bite-in sealing in the temporarily sealed portion 22. If such bite-in sealing exists, the fused layer of a laminated film that forms the bag (which consists, for instance, of a three-layer laminated body of a plastic film/aluminum foil/plastic film, with the plastic film of the inner layer acting as the fused layer) is easily ruptured, and the inside liquid substances leak from this area, leading to the possibility of leakage to the outside via the glue layers between the film layers. For this reason, and since the sealing reliability in the temporarily sealed portion 22 is low, it is preferable that the ultrasonically sealed portion 25 be positioned below the temporarily sealed portion 22 as in the shown embodiment.

In the above, the first transporting device and the second transporting device are installed as bag transporting devices. However, bags can be positioned by way of using a single transporting device.

Furthermore, in the above-described structure, the rotary type vacuum processing device 2 rotates intermittently; however, the present invention is applicable to a rotary type vacuum processing device that rotates continuously (which is of the type described in, for instance, the above-described Japanese Patent Application Publication (Kokoku) No. 5-58988). In such a continually rotating device, for example, the gripping elements of the bag transporting device are moved in synchronization with the movement of the vacuum chambers over a specified distance, these gripping elements grip the degassed bags inside the vacuum chambers, and the gripping elements then take out the bags from the vacuum chambers and transport the bags to a predetermined position (Though the above-described Japanese Patent Application Publication (Kokoku) No. 5-58988 discloses a transfer of bags to a rotary type vacuum processing device that rotates continuously, it describes bag press-holding claws that make a movement similar to that of the above-described gripping elements).

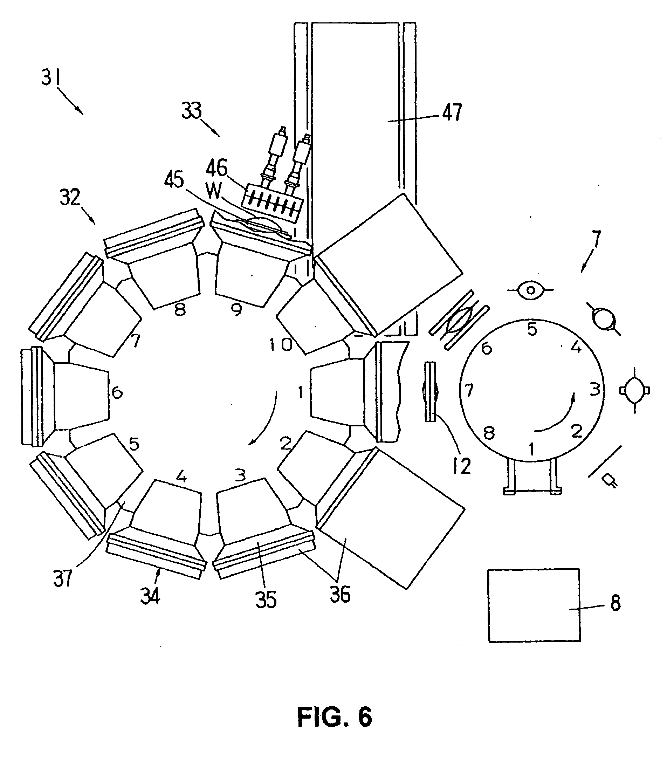

Another vacuum packaging machine 31 of the present invention will be described with reference to Figures 6 and 7. The vacuum packaging machine 31 comprises a rotary type vacuum processing device 32 and an ultrasonic sealing device 33. Like the vacuum packaging machine 1 described above, the vacuum packaging machine 31 is disposed near a filling machine 7.

The vacuum packaging machine 31 differs from the vacuum packaging machine 1 in that no bag transporting device is installed and in that an anvil 45 that forms a part of the ultrasonic sealing device 33 is disposed on the main body 35 of each one of the vacuum chambers 34 provided in the rotary type vacuum processing device 32.

As seen from Figure 7, each of the vacuum chambers 34 of the rotary type vacuum processing device 32 is comprised of a main body 35, which is fastened to a rotary table 37, and a cover 36. The cover 36 is the same as that described in the above-described Japanese Patent Application Laid-Open (Kokai) No. 9-48409; and it opens when an opening-and-closing lever 38 is rotated to the left (in Figure 7) by the action of a cam mechanism (not shown) and closes under its own weight when the cam mechanism does not act on the opening-and-closing lever 38. Figure 7 shows the opened cover 36.

Grippers 39 that grip the bag W and the moving element (hot plate) 42 of a temporary sealing device 41 are disposed on the main body 35 of each one of the vacuum chambers 34. This moving element 42 is actuated by an air cylinder 43. A receiving stand 44 of the temporary sealing device 41 is disposed on the cover 36. Furthermore, the anvil 45 of the ultrasonic sealing device 33 is provided on the main body 35 of each vacuum chamber 34 so that it is positioned beneath the temporary sealing device 41.

The rotary type vacuum processing device 32 differs from the rotary type vacuum processing device 2 (shown in Figure 1) only in that the anvil 45 is provided on the main body 35; otherwise, there are no differences in structure or operation.

The ultrasonic sealing device 33 (except for the anvil 45) is disposed near the rotary type vacuum processing device 32. The horn element 46 of this ultrasonic sealing device 33 is disposed so as to face the anvil 45 provided inside the vacuum chamber 34 that is stopped at a cover-opening position (or at the stopping position 9) of the rotary type vacuum processing device 32, so that this horn element 46 can advance toward and withdraw from this anvil 45.

When each vacuum chamber 34 stops with the cover 36 opened at the cover-opening position, the horn element 46 advances so as to hold a predetermined position on the bag mouth of a degassed bag W between the horn element 46 and the anvil 45, thus performing ultrasonic sealing to the bag. Following the completion of sealing, the horn element 46 withdraws, and then the grippers 39 open and release the bag W in the next process (stopping position 10). This bag W drops onto a product conveying conveyor 47 via a guide chute (not shown) and is discharged from the rotary type vacuum processing device 32.

As seen from the above, according to the present invention, deviations in the sealing position are prevented without increasing the size or cost of the overall apparatus in cases where an ultrasonic sealing device is used in a vacuum packaging machine. Furthermore, the productivity of the vacuum packaging machine improves by way of using the characteristics of the ultrasonic sealing device, which makes it possible to perform the sealing in a short time.

## Claims

1. A vacuum packaging method that uses a rotary type vacuum processing device, said rotary type vacuum processing device being comprised of:
a rotary table, and
a plurality of vacuum chambers disposed at equal intervals on a circumference of said rotary table, wherein
each one of said vacuum chambers comprises:
a main body that is fastened to said rotary table, and
a cover that is caused to open and close with respect to said main body;
each vacuum chamber is caused to be placed in a vacuum state or in an atmospheric pressure state with a predetermined timing; and
grippers that suspend filled bags in a state in which bag mouths of said filled bags face upward are disposed on said main body,
wherein said vacuum packaging method comprises the steps of, during rotation of said rotary table,
accommodating filled bags inside said vacuum chambers,
performing a degassing treatment by placing interiors of said vacuum chambers in a vacuum state so that a vacuum is caused to act on said filled bags,
placing said vacuum chambers back to an atmospheric pressure state, and opening said cover; and
the further steps of:
taking out said filled bags, which have been subjected to said degassing treatment, from said vacuum chambers, and
conveying said filled bags to an ultrasonic sealing device disposed near said rotary type vacuum processing device, where bag mouths of said filled bags are ultrasonically sealed by means of said ultrasonic sealing device.

2. The vacuum packaging method according to Claim 1, wherein said bag mouths are placed under tension by being pulled from both edges thereof prior to performing ultrasonic sealing.

3. A vacuum packaging method that uses a rotary type vacuum processing device, said rotary type vacuum processing device being comprised of:
*an intermittently rotating table,* and
a plurality of vacuum chambers disposed at equal intervals on a circumference of said *intermittently rotating table,* wherein
each one of said vacuum chambers comprises:
a main body that is fastened to said *intermittently rotating table,* and
a cover that is caused to open and close with respect to said main body,
each vacuum chamber is caused to be placed in a vacuum state or in an atmospheric pressure state with a predetermined timing,
grippers that suspend filled bags in a state in which bag mouths of said filled bags face upward are disposed on said main body, and
an anvil which forms a part of an ultrasonic sealing device is disposed above said grippers disposed on said main body,
wherein said vacuum packaging method comprises the steps of, during repeated rotation and stopping of said rotary table:
accommodating filled bags inside said vacuum chambers,
performing a degassing treatment by placing interiors of said vacuum chambers in a vacuum state so that a vacuum is caused to act on said filled bags,
placing said vacuum chambers back to an atmospheric pressure state,
opening said cover, and
causing a horn element of an ultrasonic sealing device disposed near said rotary type vacuum processing device so as to hold the bag mouth of the filled bag between the horn element and the anvil and to perform ultrasonic sealing; and
the further steps of:
releasing said grippers so that sealed filled bags are taken out of said vacuum chambers.

4. The vacuum packaging method according to any one of claims 1 through 3, wherein said bag mouths are temporarily sealed following said degassing treatment so that a degassed state inside said filled bags is maintained when said vacuum chambers are placed back to said atmospheric pressure state.

5. The vacuum packaging method according to Claim 4, wherein a sealing position of said ultrasonic sealing is located below said sealing position of temporary sealing.

6. A vacuum packaging machine equipped with an ultrasonic sealing device, said vacuum packaging machine comprising:
(1) a rotary type vacuum processing device that is comprised of:
an intermittently rotating table, and
a plurality of vacuum chambers disposed at equal intervals on a circumference of said intermittently rotating table, wherein
each one of said vacuum chambers comprises:
a main body that is fastened to said intermittently rotating table, and
a cover that is caused to open and close with respect to said main body;
each vacuum chamber is caused to be placed in a vacuum state or in an atmospheric pressure state with a predetermined timing; and
grippers that suspend filled bags in a state in which bag mouths of said filled bags face upward are disposed on said main body,
wherein said rotary type vacuum processing device, during repeated rotation and stopping of said intermittently rotating table,
accommodates filled bags inside said vacuum chambers, and
performs a degassing treatment by placing interiors of said vacuum chambers in a vacuum state so that a vacuum is caused to act on said filled bags;
(2) an ultrasonic sealing device which is disposed near said rotary type vacuum processing device; and
(3) a bag transporting device which takes out said filled bags that have been subjected to said degassing treatment from said vacuum chambers stopped at a take-out position and then transports said filled bags to a sealing position of said ultrasonic sealing device.

7. The vacuum packaging machine equipped with an ultrasonic sealing device according to Claim 6, wherein said bag transporting device comprises:
a first transporting device that takes out said filled bags, which have been subjected to said degassing treatment, from said vacuum chambers stopped at said take-out position and transports said filled bags to a predetermined position, and
a second transporting device that receives said filled bags from said first transporting device at said predetermined position and transports said filled bags to said sealing position.

8. The vacuum packaging machine equipped with an ultrasonic sealing device according to Claim 7, wherein said second transporting device is equipped with a pair of grippers that grip both side edges of said filled bags, a spacing between said grippers being caused to be widened and narrowed.

9. The vacuum packaging machine equipped with an ultrasonic sealing device according to any one of claims 6 through 8, wherein a temporary sealing device that holds and temporarily seals said bag mouths is disposed inside each one of said vacuum chambers.

10. A vacuum packaging machine equipped with an ultrasonic sealing device, said vacuum packaging machine comprising:
(1) a rotary type vacuum processing device that is comprised of:
an intermittently rotating table, and
a plurality of vacuum chambers disposed at equal intervals on a circumference of said intermittently rotating table, wherein
each one of said vacuum chambers comprises:
a main body that is fastened to said intermittently rotating table, and
a cover that is caused to open and close with respect to said main body;
each vacuum chamber is caused to be placed in a vacuum state or in an atmospheric pressure state with a predetermined timing; and
grippers that suspend filled bags in a state in which bag mouths of said filled bags face upward are disposed on said main body,
wherein said rotary type vacuum processing device, during repeated rotation and stopping of said intermittently rotating table,
accommodates filled bags inside said vacuum chambers, and
performs a degassing treatment by placing interiors of said vacuum chambers in a vacuum state so that a vacuum is caused to act on said filled bags; and
(2) an ultrasonic sealing device which is disposed near a cover opening position of said rotary type vacuum processing device, said ultrasonic sealing device having an anvil which is provided above said grippers of said main body of each one of said vacuum chambers, wherein a horn element of said ultrasonic sealing device is caused to advance toward and withdraw from said anvil provided in each one of said vacuum chambers stopped at said cover opening position, and said horn element performs ultrasonic sealing by press-holding said bag mouths against said anvil.

11. The vacuum packaging machine equipped with an ultrasonic sealing device according to Claim 10, wherein a temporary sealing device which holds and temporarily seals said bag mouths is disposed inside each one of said vacuum chambers.

12. The vacuum packaging machine equipped with an ultrasonic sealing device according to Claim 11, wherein said anvil is provided below said temporary sealing devices.
